# EUROPEAN PATENT SPECIFICATION

(11) **EP 3 955 550 B1**
(45) Date of publication and mention of the grant of the patent: **16.10.2024**
(21) Application number: 21189861.4
(22) Date of filing: 05.08.2021
(51) Int. Cl.: H04L 47/10, H04L 47/30, H04L 47/52, H04L 47/50, H04L 49/90

(54) **FLOW-BASED MANAGEMENT OF SHARED BUFFER RESOURCES**
FLUSSBASIERTE VERWALTUNG VON GEMEINSAM GENUTZTEN PUFFERRESSOURCEN
GESTION DES RESSOURCES TAMPONS PARTAGÉES BASÉE SUR LE FLUX

(30) Priority: 10.08.2020 US 202016988800
(43) Date of publication of application: 16.02.2022
(73) Proprietor: Mellanox Technologies, Ltd., 2069200 Yokneam (IL)
(72) Inventor: AIBESTER, Niv, 43662 Raanana (IL); KFIR, Aviv, 43662 Raanana (IL); LEVY, Gil, 43662 Raanana (IL); MULA, Liron, 43662 Raanana (IL); GAFNI, Barak, 43662 Raanana (IL)
(74) Representative: Kramer, Dani

(56) References cited:
- US-A1- 2018 091 388
- US-B1- 7 215 641

## Description

### TECHNICAL FIELD

Embodiments described herein relate generally to communication networks, and particularly to methods and apparatus for flow-based management of shared buffer resources.

### BACKGROUND

A network element typically stores incoming packets for processing and forwarding. Storing the packets in a shared buffer enables to share storage resources efficiently. Methods for managing shared buffer resources are known in the art. For example, U.S. Patent 10,250,530 describes a communication apparatus that includes multiple interfaces configured to be connected to a packet data network for receiving and forwarding of data packets of multiple types. A memory is coupled to the interfaces and configured as a buffer to contain packets received through the ingress interfaces while awaiting transmission to the network via the egress interfaces. Packet processing logic is configured to maintain multiple transmit queues, which are associated with respective ones of the egress interfaces, and to place both first and second queue entries, corresponding to first and second data packets of the first and second types, respectively, in a common transmit queue for transmission through a given egress interface, while allocating respective spaces in the buffer to store the first and second data packets against separate, first and second buffer allocations, which are respectively assigned to the first and second types of the data packets.

US7215641 B1 relates to a per-flow dynamic buffer management scheme for a data communications device. With per-flow dynamic buffer limiting, the header information for each packet is mapped into an entry in a flow table, with a separate flow table provided for each output queue. Each flow table entry maintains a buffer count for the packets currently in the queue for each flow. On each packet enqueuing action, a dynamic buffer limit is computed for the flow and compared against the buffer count already used by the flow to make a mark, drop, or enqueue decision. A packet in a flow is dropped or marked if the buffer count is above the limit. Otherwise, the packet is enqueued and the buffer count incremented by the amount used by the newly-enqueued packet.

US2018/091388A1 relates to a communication apparatus including multiple interfaces connected to a packet data network and at least one memory configured as a buffer to contain packets received through the ingress interfaces while awaiting transmission to the network via respective egress interfaces. Processing circuitry is configured to identify data flows to which the data packets that are received through the ingress interfaces belong, to assess respective bandwidth characteristics of the data flows, and to select one or more of the data flows as candidate flows for mirroring responsively to the respective bandwidth characteristics. The processing circuitry selects, responsively to one or more predefined mirroring criteria, one or more of the data packets in the candidate flows for analysis by a network manager, and sends the selected data packets to the network manager over the network via one of the egress interfaces.

### SUMMARY

The present invention is disclosed in the independent claims. The dependent claims define particular embodiments of the invention.

### BRIEF DESCRIPTION OF THE DRAWINGS

Fig. 1 is a block diagram that schematically illustrates a network element handling flow-based packet admission in a shared buffer, in accordance with an embodiment that is described herein;
Figs. 2A...2C are diagrams that schematically illustrate example flow-based admission configurations, in accordance with embodiments that are described herein;
Fig. 3 is a flow chart that schematically illustrates a method for data-plane processing for flow-based admission, in accordance with an embodiment that is described herein; and
Fig. 4 is a flow chart that schematically illustrates a method for producing flow-based admission states, in accordance with an embodiment that is described herein.

### DETAILED DESCRIPTION OF EMBODIMENTS

### OVERVIEW

Embodiments that are described herein provide methods and systems for flow-based management of shared buffer resources.

A shared buffer in a network element stores incoming packets that typically belong to multiple flows. The stored packets are processed and await transmission to their appropriate destinations.

The storage space of the shared buffer is used for storing packets received via multiple ingress ports and destined to be delivered via multiple egress ports. In some embodiments, a shared buffer controller manages the shared buffer for achieving fair allocation of the storage space among ports.

In some embodiments, the shared buffer controller manages the shared buffer resources by allocating limited amounts of storage space to entities referred to herein as "regions." A region may be assigned to a pair comprising an ingress port and a reception priority, or to a pair comprising an egress port and a transmission priority. For each region, the shared buffer stores data up to a respective threshold that is adapted dynamically.

The shared buffer performs accounting of the amount of data currently buffered per each region and decides to admit a received packet into the shared buffer or to drop the packet, based on the accounting. In this scheme, the decision of packet admission is related to ingress/egress ports and to reception/transmission priorities but does not take into consideration the flows to which the packets traversing the network element belong.

In the disclosed embodiments, for enhancing the flexibility in managing the shared buffer storage space, a new type of a region is specified, which is referred to herein as a "flow-based" region. A flow-based region corresponds to a specific flow but is independent of any ports and the priorities assigned to ports. Using flow-based regions provides a flow-based view of the shared buffer usage, and therefore can be used for prioritizing different data flows in sharing the storage space. Moreover, complex admission schemes that combine several flow-based regions or combine a flow-based region with a port/priority region can also be used.

Consider a network element comprising multiple ports, a memory configured as a Shared Buffer (SB), a SB controller and data-plane logic. The multiple ports are configured to connect to a communication network. The Shared Buffer (SB) is configured to store packets received from the communication network. The SB controller is configured to perform flow-based accounting of packets received by the network element for producing flow-based data counts, each flow-based data count associated with one or more respective flows, and to generate admission states based at least on the flow-based data counts, each admission state is generated from one or more respective flow-based data counts. The data-plane logic is configured to receive a packet from an ingress port, to classify the packet into a respective flow, and based on one or more admission states that were generated based on the flow-based data counts, to decide whether to admit the packet into the SB or drop the packet.

The SB controller may manage the data counts and admission states in various ways. In an embodiment, the SB controller produces an aggregated data count for packets belonging to multiple different flows, and generates an admission state for the packets of the multiple different flows based on the aggregated data count. In another embodiment, the SB controller produces first and second flow-based data counts for packets belonging to respective first and second different flows, generates an admission state for the packets of the first and second flows based on both the first and the second flow-based data counts. In yet another embodiments, the SB controller generates multiple admission states based on multiple selected flows, and the data-plane logic decides whether to admit a packet belonging to one of the selected flows into the SB or drop the packet, based on the multiple admission states.

In processing the received packets, the data-plane logic determines for the received packets respective egress ports, ingress priorities and egress priorities. The SB controller performs occupancy accounting for (i) Rx data counts associated with respective ingress ports and ingress priorities, and (ii) Tx data counts associated with respective egress ports and egress priorities. The SB controller generates the admission states based on the flow-based data counts and on at least one of the Rx data counts and the Tx data counts. Note that the SB controller performs the flow-based accounting and the occupancy accounting in parallel.

The SB controller may link a received packet to a flow-based data count in various ways. In some embodiments, the SB controller identifies for a received packet a corresponding flow-based data count by (i) applying a hash function to one or more fields in a header of the received packet, or (ii) processing the packet using an Access Control List (ACL). In other embodiments, the SB controller identifies for a received packet a corresponding flow-based data count based on flow-based binding used in a protocol, such as, for example, a tenant protocol, a bridging protocol, a routing protocol or a tunneling protocol.

The flow-based accounting that is used for managing the SB resources may be used for other purposes such as flow-based mirroring and flow-based congestion avoidance, as will be described further below.

In the disclosed techniques a SB controller performs flow-based accounting for selected flows. This allows sharing storage space based on individual flow prioritization. This flow-based view enables fair sharing of storage space among competing flows, regardless of the ports via which the flows arrive at the network element. Moreover, flexible admission schemes that combine flow-based data counts and occupancy data counts are also possible.

### SYSTEM DESCRIPTION

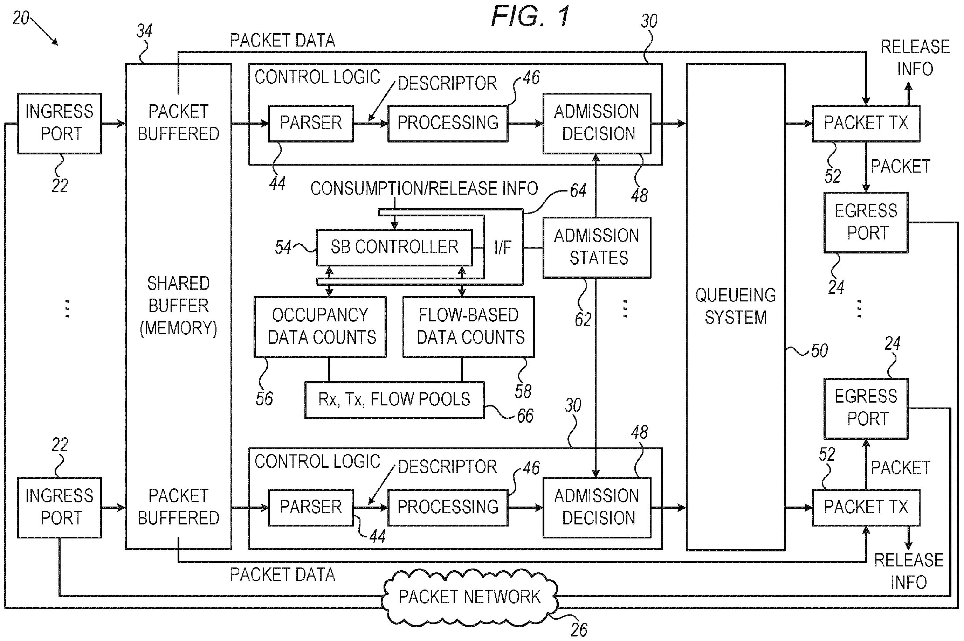

Fig. 1 is a block diagram that schematically illustrates a network element 20 handling flow-based packet admission in a shared buffer, in accordance with an embodiment that is described herein.

In the description that follows and in the claims, the term "network element" refers to any device in a packet network that communicates packets with other devices in the network, and/or with network nodes coupled to the network. A network element may comprise, for example, a switch, a router, or a network adapter.

Network element 20 comprises interfaces in the form of ingress ports 22 and egress ports 24 for connecting to a communication network 26. Network element 20 receives packets from the communication network via ingress ports 22 and transmits forwarded packets via egress ports 24. Although in Fig. 1, the ingress ports and egress ports are separated, in practice, each port may serve as both an ingress port and an egress port.

Communication network 26 may comprise any suitable packet network operating using any suitable communication protocols. For example, communication network 26 may comprise an Ethernet network, an IP network or an InfiniBand^{™} network.

Each ingress port 22 is associated with respective control logic 30 that processes incoming packets as will be described below. Although in Fig. 1 only two control logic modules are depicted, a practical network element may comprise hundreds ingress ports and corresponding control logic modules. A memory 34, coupled to ports 22, is configured as a shared buffer for temporarily storing packets that are processed and assigned to multiple queues for transmission to the communication network.

Upon receiving an incoming packet via an ingress port 22, the ingress port places the packet in shared buffer 34 and notifies relevant control logic 30 that the packet is ready for processing. A parser 44 parses the packet header(s) and generates for the packet a descriptor, which the parser passes to a descriptor processor 46 for further handling and generation of forwarding instructions. Based on the descriptor, descriptor processor 46 typically determines an egress port 24 through which the packet is to be transmitted. The descriptor may also indicate the quality of service (QoS) to be applied to the packet, i.e., the level of priority at reception and for transmission, and any applicable instructions for modification of the packet header. An admission decision module 48 decides on whether to drop or admit the packet. The admission decision module determines the admission decision based on admission states 62, as will be described in detail bellow.

Descriptor processor 46 places the descriptors of admitted packets in the appropriate queues in a queueing system 50 to await transmission via the designated egress ports 24. Typically, queuing system 50 contains a dedicated queue for each egress port 24 or multiple queues per egress port, one for each QoS level (e.g., transmission priority).

Descriptor processor 46 passes the descriptors of admitted packets to queueing system 50 and to a buffer (SB) controller 54, which serves as the central buffer management and accounting module for shared buffer 34. SB controller 54 performs two types of accounting, referred to herein as "occupancy accounting" and "flow-based accounting." For the occupancy accounting, the SB controller manages "occupancy data counts" 56, whereas for the flow-based accounting, the SB controller manages "flow-based data counts" 58. SB controller 54 receives consumption information in response to control logic 30 deciding to admit a packet, and receives release information in response to transmitting a queued packet. SB controller 54 increments or decrements the occupancy data counts and the flow-based data counts, based on the consumption and release information.

The SB controller may manage the occupancy data counts and the flow-based data counts using any suitable count units, such as numbers of bytes or packets. Based on flow-based data counts 58 and possibly on occupancy data counts 56, SB controller produces admission states 62 to be used by admission decision modules 48 for deciding on admission/drop for each received packet.

In some embodiments, SB controller 54 that manages flow-based data counts as well as occupancy data counts in association with entities that referred to herein as "regions." An occupancy region comprises a pair of an ingress port and Rx priority or a pair of an egress port and a Tx priority. A flow-based region comprises a flow. The SB controller may determine admission states 62 based on pools 66, wherein each pool is associated with multiple regions or with their corresponding data counts. For example, a pool comprises one or more flow-based data counts, and possibly one or more Rx occupancy data counts and/or one or more Tx occupancy data counts.

In some embodiments, SB controller 54 comprises an interface 64, via which the SB controller accesses occupancy data counts 56, flow-based data counts 58, and admission states 62. In an embodiment, interface 64 serves also for accessing consumption and release information by the SB controller.

When a descriptor of a packet queued in queueing system 50 reaches the head of its queue, queuing system 50 passes the descriptor to a packet transmitter 52 for execution. Packet transmitters 52 are respectively coupled to egress ports 24 and serve as packet transmission modules. In response to the descriptor, packet transmitter 52 reads the packet data from shared buffer 34, and (optionally) makes whatever changes are called for in the packet header for transmission to communication network 26 through egress port 24.

Upon the transmission of the packet through the corresponding egress port 24, packet transmitter 52 signals SB controller 54 that the packet has been transmitted, and in response, SB controller 54 releases the packet from SB 34, so that the packet location in SB 34 can be overwritten. This memory accounting and management process typically takes place for multiple different packets in parallel at any given time.

The configuration of network element 24 in Fig. 1, is given by way of example, and other suitable network element configurations can also be used.

Some elements of network element 20, such as control logic 30 and SB controller 54 may be implemented in hardware, e.g., in one or more Application-Specific Integrated Circuits (ASICs) or Field-Programmable Gate Arrays (FPGAs). Additionally or alternatively, some elements of the network element can be implemented using software, or using a combination of hardware and software elements.

Elements that are not necessary for understanding the principles of the present application, such as various interfaces, addressing circuits, timing and sequencing circuits and debugging circuits, have been omitted from Fig. 1 for clarity.

Memory 34 may comprise any suitable storage device using any suitable storage technology, such as, for example, a Random Access Memory (RAM). The SB may be implemented in an on-chip internal RAM or in an off-chip external RAM.

In some embodiments, the SB controller is comprised in any suitable apparatus such as a network element or a Network Interface Controller (NIC). In some embodiments, the SB is comprised in a memory accessible to the SB controller, the memory being external to the apparatus. In other embodiments, the apparatus further comprises a memory, and the SB is comprised in the memory.

In some embodiments, some of the functions of SB controller 54 may be carried out by a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

In the description that follows and in the claims, elements involved in real-time packet processing and forwarding for transmission are collectively referred to as "data-plane logic." In the example of Fig. 1, the data-plane logic for processing a given packet comprises ingress port 22, control logic 30, queueing system 50, packet Tx 52 and egress port 24. The data-plane logic does not include control processing tasks such as generating admission states 62 by SB controller 54.

### SHARED BUFFER ACCOUNTING AND MANAGEMENT

In some embodiments, SB controller 54 manages SB 34 for achieving a fair usage of the shared buffer. To this end, regions corresponding to (PI,Rp) and (PO,Tp) are allocated respective storage spaces in the shared buffer. In the regions above, PI and PO denote respective ingress and egress ports, and Rp and Tp denote respective reception and transmission priorities. The allocated storage spaces are bounded to respective dynamic thresholds. The SB controller holds the amount of data consumed at any given time by regions (PI,Rp) and (PO,Tp) in respective occupancy data counts 56.

In some disclosed embodiments, the SB controller manages the SB resources using a flow-based approach. In these embodiments, the SB manages flow-based regions associated with flow-based data counts 58. Each flow-based region virtually consumes a storage space of the shared buffer bounded to a dynamic threshold. A flow-based view of SB storage consumption can be used for prioritizing SB storage among different data flows.

Admission states 62 are indicative of the amount of data consumed relative to corresponding dynamic thresholds. An admission state may have a binary value that indicates whether a data count exceeds a relevant dynamic threshold, in which case the packet should be dropped. Alternatively, an admission state may have multiple discrete values or a contiguous range, e.g., an occupancy percentage of the bounded storage space.

A packet tested by admission decision module 48 for admission may be linked to one or more regions (or corresponding data counts). For example, the packet may be linked to an occupancy data count of a region (PI, Rp), to an occupancy data count of a region (PO, Tp), and/or to a flow-based data count of a flow-based region. In general, a packet may be linked to at least one of the data count types (i) flow-based data count (ii) Rx occupancy data count, and (iii) Tx occupancy data count. Each data count type may be associated with a pool 66, depending on the SB configuration. A packet linked to a pool of multiple data counts is also associated with one or more admission states that SB controller 54 determines based on the multiple data counts.

A packet may be linked or bound to a certain data count or to a pool of multiple data counts in various ways, as described herein. In some embodiments, SB controller 54 identifies a data count (or a pool) corresponding to a received packet, e.g., a flow-based data count, by applying a hash function to one or more fields in a header of the received packet resulting in an identifier of the pool. In another embodiment, the SB controller identifies a data count (or a pool) corresponding to a received packet by processing the received packet using an Access Control List (ACL) that extracts the pool identifier.

In some embodiments, the SB controller identifies for a received packet corresponding data counts (e.g., flow-based data count) based on flow-based binding used in a protocol selected from a list of protocols comprising: a tenant protocol, a bridging protocol, a routing protocol and a tunneling protocol. In these embodiments, the flow to which the packet belongs represents the selected protocol.

Decision module 48 may decide on packet admission or drop, based on multiple admission states, in various ways. For example, when using binary admission states, decision module 48 may decide to admit a packet only when all the relevant admission states are indicative of packet admission. Alternatively, SB controller 54 may decide on packet admission when only part of the relevant admission states are indicative of packet admission, e.g., based on a majority vote criterion.

In some embodiments, the values of the admission states comprise a contiguous range, and the decision module decides on packet admission by calculating a predefined function over some or all of the relevant admission states. For example, the SB controller calculates an average data count based on two or more selected data counts, and determines the admission state by comparing the average data count to the dynamic threshold.

### FLOW-BASED ADMISSION CONFIGURATIONS

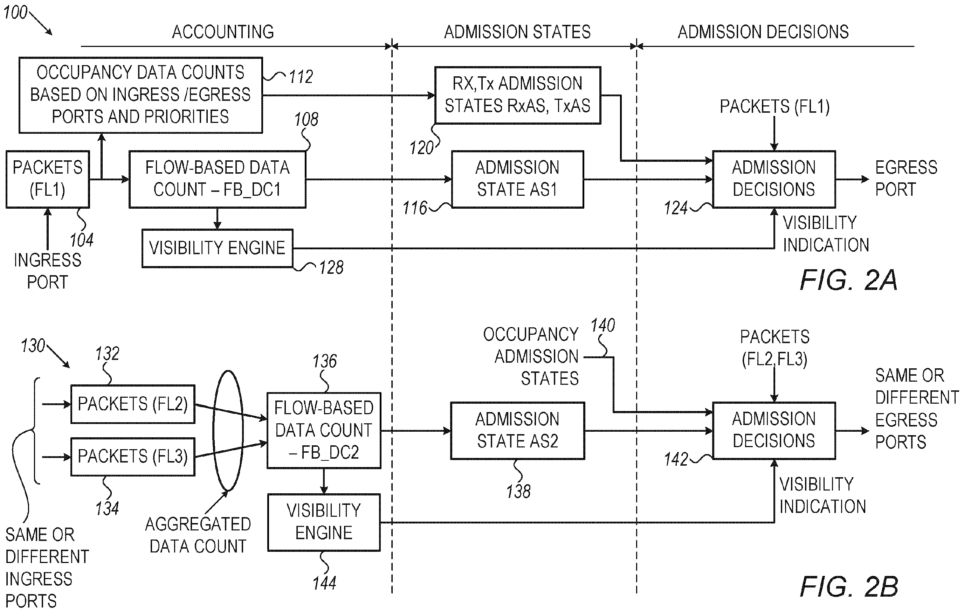

Figs. 2A...2C are diagrams that schematically illustrate example flow-based admission configurations, in accordance with embodiments that are described herein.

In general, accounting and generating admission states are tasks related to control-plane processing, whereas admission decision is a task related to the data-plane processing. The flow-based admission configurations will be described as executed by network element 20 of Fig. 1.

Fig. 2A depicts a processing flow 100 in which packet admission is based on a single flow denoted FL1. Packets 104 belonging to flow FL1 are received via an ingress port 22, which places the packets in SB 34. Typically, packets of flows other than FL1 are also received via the same ingress port as the packets of FL1. The packets received via ingress port 22 are processed by a respective control logic module 30.

In performing accounting, SB controller 54 receives consumption information indicative of admitted packets, and release information indicative of transmitted packets. SB controller 54 performs flow-based accounting to the FL1 packets to produce a flow-based data count denoted FB_DC1. In some embodiments, based on the consumption and release information, SB controller 54 performs occupancy-based accounting to produce occupancy data counts 112, depending on ingress ports, egress ports and Rx/Tx priorities determined from packets' headers. This accounting is part of the control-plane tasks.

SB controller 54 produces for the packets of FL1, based on FB_DC1, an admission state 116, denoted AS1. In the example of Fig. 2A, SB controller 54 also produces, based on occupancy data counts 112, occupancy admission states 120, including Rx admission states denoted RxAS, and Tx admission states denoted TxAS. Occupancy data counts 112 and admission states 120 are not related to any specific flow.

In deciding on packet admission, admission decision module 48 produces respective admission decisions 124 for the packets of flow FL1. The admission decisions may be based, for example, on the flow-based admission state AS1 alone, or on one or more of occupancy admission states 120 in addition to AS1.

In some embodiments, SB controller 54 comprises a visibility engine 128 that monitors flow-based data counts such as FB_DC1. Visibility engine 128 generates a visibility indication based on the behavior of FB_DC1. For example, the visibility indication may be indicative of a short-time change in the value of the flow-based data count. In some embodiments, admission decision module 48 may produce admission decisions 124 based also on the visibility indication. In some embodiments, visibility engine 128 produces a visibility indication that is used for flow-based mirroring, as will be described below.

Control logic 30 passes descriptors of packets belonging to FL1 for which the admission decision is positive to queueing system 50, for transmission to the communication network, using packet TX 52, via an egress port 24. Control logic 30 reports packets of FL1 that have been dropped to the SB controller, which releases the dropped packets from SB 34.

Fig. 2B, depicts a processing flow 130 in which packet admission is based on two different flows denoted FL2 and FL3. Packets 132 belonging to FL2 and packets 134 belonging to FL3 are received via an ingress port 22 (or via two different ingress ports 22) and placed in SB 34. Note that packets received via different ingress ports are processed using different respective control logic module 30.

In the present example, in performing accounting, SB controller 54 performs aggregated flow-based accounting for the packets of both FL2 and FL3 to produce a common flow-based data count 136 denoted FB_DC2. The flow-based data count FB_DC2 is indicative of the amount of data currently buffered in the network element from both FL2 and FL3.

SB controller 54 produces for the packets of FL2 and FL3, based on FB_DC2, an admission state 138, denoted AS2. In the example of Fig. 2B, SB controller 54 also produces, based on the occupancy data counts, occupancy admission states 140 (similarly to admission states 116 of Fig. 2A).

In deciding on admission, admission decision modules 48 in control logic modules 30 that process packets of FL2 and FL3, produce admission decisions 142 for the packets of both FL2 and FL3. The admission decisions may be based, for example, on flow-based admission state AS2 alone, or on AS2 and on one or more of occupancy admission states 140.

In some embodiments, a visibility engine 144 (similar to visibility engine 128 above) monitors FB_DC2 and outputs a visibility indication based on FB_DC2. Admission decision module 48 may use the visibility indication in producing admission decisions 142.

Control logic modules 30 that process packets of FL2 and FL3, pass descriptors of packets belonging to these flows that have been admitted to queueing system 50, for transmission using packet Tx 52 via a common egress port 24 or via two respective egress ports. Control logic modules 30 that process packets of FL2 and FL3, report packets of FL2 and FL3 that have been dropped to the SB controller, which releases the dropped packets from SB 34.

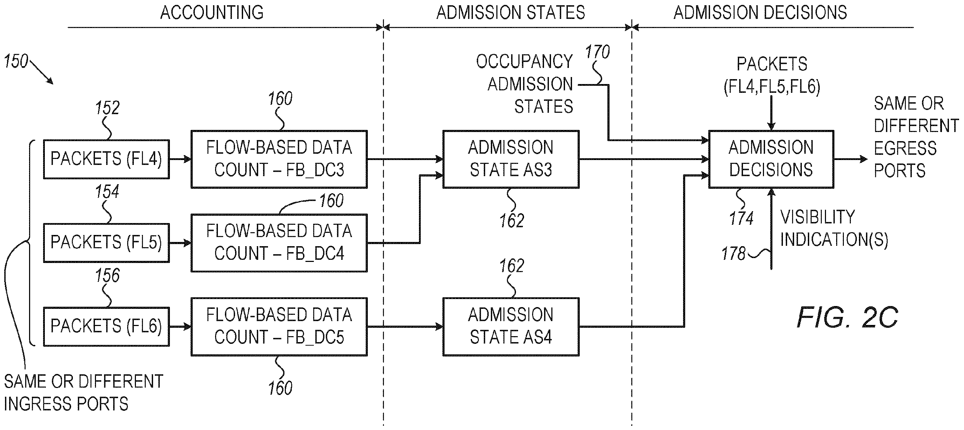

Fig. 2C, depicts a processing flow 150 for packet admission based on three different flows denoted FL4, FL5 and FL6. Packets 152, 154 and 156 belonging to respective flows FL4, FL5 and FL6 are received via one or more ingress ports 22 and placed in SB 34.

In the present example, in performing accounting, SB controller 54 performs separate flow-based accounting to packets of FL4, FL5 and FL6, to produce respective flow-based data counts 160 denoted FB_DC3, FB_DC4 and FB_DC5.

In the present example, SB controller 54 produces, based on data counts FB_DC3, FB_DC4 and FB_DC5 two admission states 162 denoted AS3 and AS4. Specifically, SB controller 54 produces AS3 based on data counts FB_DC3 and FB_DC4 corresponding to FL4 and FL5, and produces, AS4 based on a single data count FB_DC5 corresponding to FL6. In some embodiments, SB controller 54 also produces, based on the occupancy data counts, occupancy admission states 170 (similarly to admission states 116 of Fig. 2A).

In deciding on admission, admission decision modules 48 of control logic modules 30 that process packets of FL4, FL5 and FL6 produce admission decisions 174 for the packets of flows FL4, FL5 and FL6, based at least on one of flow-based admission states AS3 and AS4. In an embodiment, the admission decision is also based on one or more of occupancy admission states 170.

In some embodiments, the admission decisions may be additionally based on one or more visibility indications 178 produced by monitoring one or more of flow-based data counts FB_DC3, FB_DC4 and FB_DC5 using visibility engine(s) (similar to visibility engines 128 and 144 - not shown).

Control logic modules 30 that process packets of FL4, FL5 and FL6, pass descriptors of packets belonging to FL4, FL5 and FL6 that have been admitted to queueing system 50 for transmission by packet Tx 52 via a common egress port 24 or via two or three egress ports. Control logic modules 30 that process packets of FL4, FL5 and FL6, report packets of FL4, FL5 and FL6 that have been dropped to the SB controller, which releases the dropped packets from SB 34.

### A METHOD FOR FLOW-BASED PACKET ADMISSION

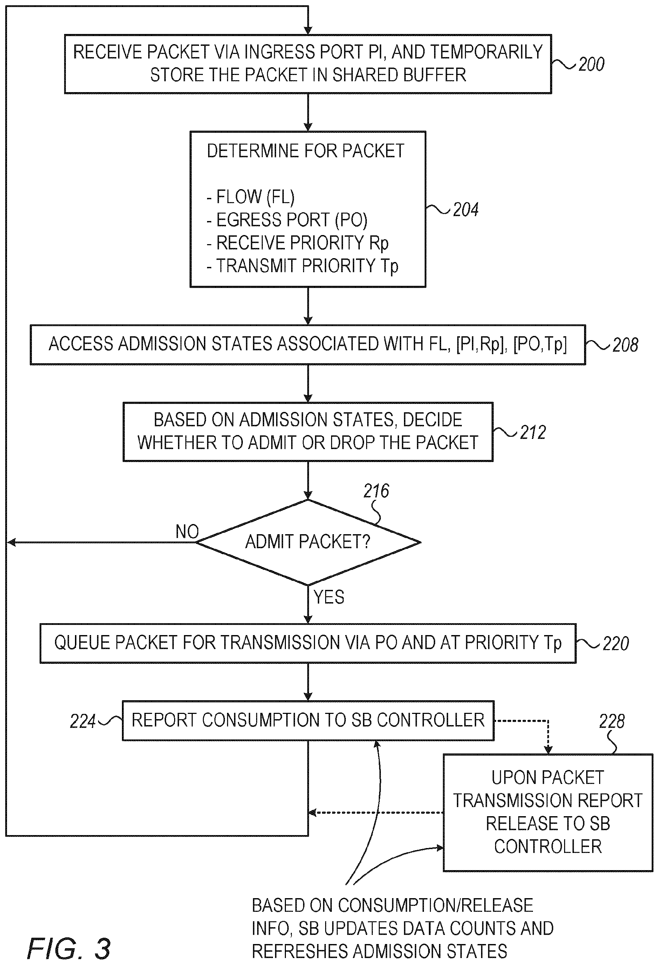

Fig. 3 is a flow chart that schematically illustrates a method for data-plane processing for flow-based admission, in accordance with an embodiment that is described herein.

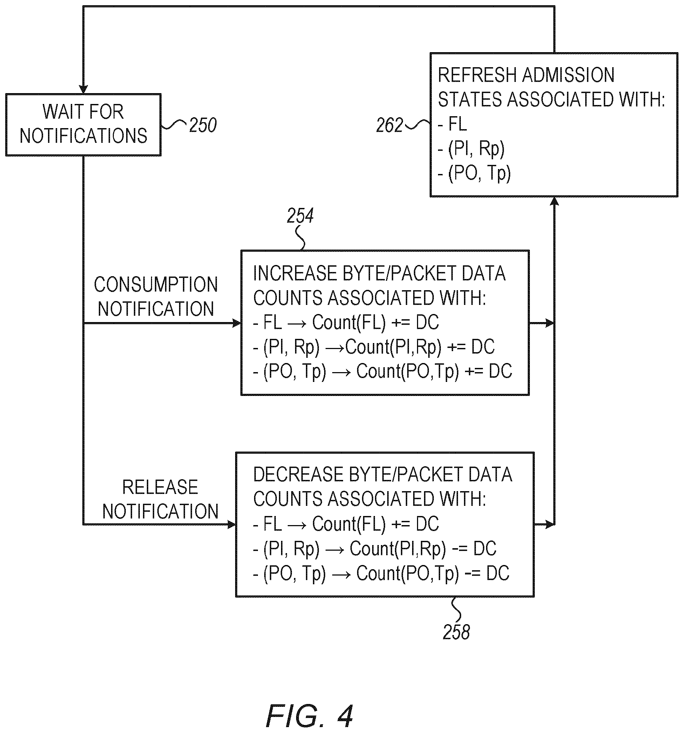

The method will be described as executed by network element 20 of Fig. 1. In performing the method of Fig. 3 it is assumed that SB controller has produced, using previously received packets, admission states 62 that are accessible by admission decision modules 48. A method for producing admission states will be described with reference to Fig. 4 below.

The method of Fig. 3 begins with network element 20 receiving a packet via an ingress port 22 and storing the received packet in SB 34, at a packet reception step 200. The ingress port in question is denoted "PI."

At a packet analysis step 204, parser 44 parses the packet header(s) to generate a descriptor for the packet. Parser 44 passes the descriptor to descriptor processor 46, which based on the descriptor determines the following parameters:
- FL - The flow to which the packet belongs.
- PO - The egress port to which the packet should be forwarded.
- Rp - Reception priority for the packet.
- Tp - Transmission priority for the packet.

At an admission states accessing step 208, admission decision module 48 reads one or more admission states associated with (PI,Rp), (PO,Tp) and FL. As noted above, admission states associated with (PI,Rp) and with (PO,Tp) are produced by SB controller 54 based on occupancy data counts 56, and admission states associated with FL are produced by SB controller 54 based on flow-based data counts 58.

At a decision step 212, admission decision module 48 decides, based on the one or more admission states observed at step 108, whether to admit or drop the packet.

At an admission query step 216, descriptor processor 46 checks whether the packet should be admitted. When the decision at step 216 is to drop the packet, the method loops back to step 100 to receive another packet. Descriptor processor 46 also reports the dropped packet to the SB controller for releasing storage space occupied by the dropped packet. When the decision at step 216 is to admit the packet, descriptor processor 46 proceed to a queueing step 220. At step 220, the descriptor processor places the corresponding descriptor in an appropriate queue in queueing system 50 to await transmission via the designated egress ports PO at the transmission priority Tp. At a consumption reporting step 224, descriptor processor 46 reports consumption information related to the admitted packet to SB controller 54 for accounting. Following step 224, the method loops back to step 100 to receive a subsequent packet.

At a release reporting step 228, upon transmission of the queued packet via the port PO, packet Tx 52 reports the release event to SB controller 54, for accounting update and refreshing relevant admission states.

### METHODS FOR PRODUCING FLOW-BASED ADMISSION STATES

Fig. 4 is a flow chart that schematically illustrates a method for producing flow-based admission states, in accordance with an embodiment that is described herein.

The method will be described as executed by SB controller 54 of Fig. 1.

The method of Fig. 4 begins with SB controller waiting for receiving consumption and release notifications, at a waiting step 250. As noted above, descriptor processor 46 generates a consumption notification in response to packet admission, and packet transmitter 52 generates a release notification in response to transmitting a previously admitted and queued packet. It is assumed that each consumption/release notification comprises a pointer to a descriptor of the underlying packet, which is indicative of the flow FL to which the packet belong, and to the regions (PI,Rp) and (PO,Tp) of the packet.

In response to receiving a consumption notification corresponding to a given packet, SB controller 54 increases a flow-based data count associated with a flow FL to which the given packet belongs. The SB controller also increases occupancy data counts associated with regions (PI, Rp), (PO, Tp) of the given packet. Let DC denote the amount of data corresponding to the given packet. At step 254, the SB controller calculates updated data counts as follows: Count(FL) += DC, Count(PI,Rp) += DC, and Count(PO,Tp) += DC.

In response to receiving a release notification corresponding to a given packet, SB controller 54 decreases a flow-based data count associated with a flow FL to which the given packet belongs. The SB controller also decreases occupancy data counts associated with regions (PI, Rp), (PO, Tp) of the given packet. Let DC denote the amount of data corresponding to the given packet. At step 258, the SB controller calculates updated counts as follows: Count(FL) -= DC, Count(PI,Rp) -= DC, and Count(PO,Tp) -= DC.

Following each of steps 254 and 258, the method proceeds to an admission states refreshing step 262, at which SB controller 54 updates admission states 62 associated with FL, (PI,Rp) and (PO,Tp) to reflect the effect of the consumption or release events. Following step 262, the method loops back to step 250 to wait for a subsequent notification.

### FLOW-BASED MIRRORING

Mirroring is a technique used, for example, by network elements for reporting selected events, e.g., for the purpose of troubleshooting and performance evaluation. In mirroring, packets selected using a predefined criterion (e.g., congestion detection) may be reported to a central entity for analysis. The selected packets are duplicated and transmitted to the network, and therefore may undesirably consume a significant share of the available bandwidth.

In some embodiments, a mirroring criterion comprises a flow-based criterion. For example, packets belonging to a certain flow (FL) may be mirrored based on a flow-based count assigned to FL, e.g., using visibility engine 128 or 144. In some embodiments, packets of FL may be mirrored based on flow-based data counts of other flows. Additionally, packets belonging to FL may be mirrored based on one or more occupancy data counts that are associated with FL. In some embodiments, a flow-based mirroring criterion may be combined with another mirroring criterion such as identifying a congestion condition.

### FLOW-BASED CONGESTION AVOIDANCE

Weighted Random Early Detection (WRED) is a method that may be used for congestion avoidance. In WRED, the probability of dropping packets increases as the transmission queue builds up.

In some embodiments, admission decision module 48 comprises a flow-based WRED module (not shown) that participates in deciding on packet admission or drop. Specifically, SB controller 54 calculates a drop probability based at least on a flow-based data count associated with one or more selected flows, and generates a flow-based admission state for the one or more flows based on the flow-based data count and on the drop probability. In some embodiments, the SB controller determines the admission state also based on one or more occupancy data counts.

The embodiments described above are given by way of example, and other suitable embodiments can also be used. For example, in the embodiments described above, the flow-based accounting is carried out relative to ingress ports. In alternative embodiments, however, the flow-based accounting is carried out relative to egress ports.

Although the embodiments described herein mainly address flow-based management of a SB in a network element, the methods and systems described herein can also be used in other suitable network devices, such as in managing a SB of a Network Interface Controller (NIC).

It will be appreciated that the embodiments described above are cited by way of example, and that the following claims are not limited to what has been particularly shown and described hereinabove. Rather, the scope includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. An apparatus for controlling a Shared Buffer, SB, (34) the apparatus comprising:
an interface (64) configured to access flow-based data counts (58) and admission states (62);
a SB controller (54) configured to:
perform flow-based accounting of packets received by a network device (20) coupled to a communication network (26) for producing flow-based data counts, each flow-based data count associated with one or more respective flows; and
generate admission states (62), wherein the admission states comprise flow-based admission states based at least on the flow-based data counts, each flow-based admission state being generated from one or more respective flow-based data counts; and
multiple ports including an ingress port (22), configured to connect to the communication network; and
data-plane logic, configured to:
receive a packet from the ingress port;
classify the packet into a respective flow; and
based on a plurality of the generated admission states, decide whether to admit the packet into the SB or drop the packet.

2. The apparatus according to claim 1, wherein the SB is comprised in a memory accessible to the SB controller, the memory being external to the apparatus.

3. The apparatus according to claim 1, wherein the apparatus further comprises a memory, and the SB is comprised in the memory.

4. The apparatus according to any preceding claim,
wherein the SB controller is further configured to perform occupancy accounting of packets received by the network device for producing occupancy data counts, the admission states further comprise occupancy admission states, the occupancy data counts and occupancy admission states are not associated with one or more specific flows, and the plurality of the generated admission states comprises a flow-based admission state and an occupancy admission state.

5. The apparatus according to any preceding claim, wherein the SB controller is configured to produce an aggregated data count (136) for packets belonging to multiple different flows, and to generate an admission state (138) for the packets of the multiple different flows based on the aggregated data count.

6. The apparatus according to any preceding claim, wherein the SB controller is configured to produce first and second flow-based data counts for packets belonging to respective first and second different flows, and to generate an admission state for the packets of the first and second flows based on both the first and the second flow-based data counts.

7. The apparatus according to claim 1, wherein the SB controller is configured to generate multiple admission states based on multiple selected flows, and the data-plane logic is configured to decide whether to admit a packet belonging to one of the selected flows into the SB or drop the packet, based on the multiple admission states.

8. The apparatus according to any preceding claim, wherein the data-plane logic is configured to determine for received packets respective egress ports (24) among the multiple ports, ingress priorities and egress priorities, and wherein the SB controller is configured to perform occupancy accounting for (i) Rx data counts associated with respective ingress ports and ingress priorities, and (ii) Tx data counts associated with respective egress ports and egress priorities, and to generate the admission states based on the flow-based data counts and on at least one of the Rx data counts and the Tx data counts.

9. The apparatus according to claim 8, wherein the SB controller is configured to perform the flow-based accounting and the occupancy accounting in parallel.

10. The apparatus according to any preceding claim, wherein the SB controller is configured to identify for a received packet a corresponding flow-based data count by (i) applying a hash function to one or more fields in a header of the received packet, or (ii) processing the packet using an Access Control List (ACL).

11. The apparatus according to any of claims 1 to 9, wherein the SB controller is configured to identify for a received packet a corresponding flow-based data count based on flow-based binding used in a protocol selected from a list of protocols comprising: a tenant protocol, a bridging protocol, a routing protocol and a tunneling protocol.

12. The apparatus according to any preceding claim, wherein the SB controller is configured to locally monitor selected flow-based data counts, to evaluate performance level of the network device based on the monitored flow-bases data counts, and based on a reporting criterion, to report information indicative of the performance level.

13. The apparatus according to any preceding claim, wherein the SB controller is configured to calculate a drop probability based at least on a flow-based data count associated with one or more selected flows, and to generate an admission state for the one or more flows based on the flow-based data count and on the drop probability.

14. A method for controlling a Shared Buffer, SB, (34) the method comprising:
in an apparatus comprising a SB controller (54), multiple ports including an ingress port (22) configured to connect to a communication network (26), and data-plane logic:
accessing flow-based data counts (58) and admission states (62);
performing flow-based accounting of packets received by a network device (20) coupled to the communication network for producing flow-based data counts, each flow-based data count associated with one or more respective flows;
generating admission states based at least on the flow-based data counts, each admission state being generated from one or more respective flow-based data counts;
receiving a packet from the ingress port;
classifying the packet into a respective flow; and
deciding whether to admit the packet into the SB or drop the packet based on a plurality of the generated admission states.

15. The method according to claim 14, wherein: the SB is comprised in a memory accessible to the SB controller, the memory being external to the apparatus; or the apparatus further comprises a memory, and the SB is comprised in the memory.

## Patentansprüche

1. Vorrichtung zur Steuerung eines SB (Shared Buffer) (34), wobei die Vorrichtung Folgendes umfasst:
eine Schnittstelle (64), die zum Zugreifen auf flussbasierte Datenanzahlen (58) und Zulassungszustände (62) konfiguriert ist;
einen SB-Controller (54), konfiguriert zum:
Durchführen von flussbasierter Abrechnung von Paketen, die von einem mit einem Kommunikationsnetzwerk (26) gekoppelten Netzwerkgerät (20) empfangen werden, um flussbasierte Datenanzahlen zu erzeugen, wobei jede flussbasierte Datenanzahl mit einem oder mehreren jeweiligen Flüssen assoziiert ist; und
Erzeugen von Zulassungszuständen (62), wobei die Zulassungszustände flussbasierte Zulassungszustände zumindest auf der Basis der flussbasierten Datenanzahlen umfassen, wobei jeder flussbasierte Zulassungszustand aus ein oder mehreren jeweiligen flussbasierten Datenanzahlen erzeugt wird; und
mehrere Ports einschließlich eines Eingangsports (22), der zum Verbinden mit dem Kommunikationsnetzwerk konfiguriert ist; und
Logik auf Datenebene, konfiguriert zum:
Empfangen eines Pakets vom Eingangsport;
Klassifizieren des Pakets in einen jeweiligen Fluss; und
Entscheiden auf der Basis von mehreren der erzeugten Zulassungszustände, ob das Paket in den SB zugelassen oder verworfen werden soll.

2. Vorrichtung nach Anspruch 1, wobei der SB in einem Speicher enthalten ist, auf den der SB-Controller zugreifen kann, wobei der Speicher außerhalb der Vorrichtung liegt.

3. Vorrichtung nach Anspruch 1, wobei die Vorrichtung ferner einen Speicher umfasst und der SB in dem Speicher enthalten ist.

4. Vorrichtung nach einem vorherigen Anspruch,
wobei der SB-Controller ferner zum Durchführen einer Belegungsabrechnung von vom Netzwerkgerät empfangenen Paketen konfiguriert ist, um Belegungsdatenanzahlen zu erzeugen, wobei die Zulassungszustände ferner Belegungszulassungszustände umfassen, wobei die Belegungsdatenanzahlen und Belegungszulassungszustände nicht mit einem oder mehreren spezifischen Flüssen assoziiert sind und die mehreren erzeugten Zulassungszustände einen flussbasierten Zulassungszustand und einen Belegungszulassungszustand umfassen.

5. Vorrichtung nach einem vorherigen Anspruch, wobei der SB-Controller zum Erzeugen einer summierten Datenanzahl (136) für zu mehreren verschiedenen Flüssen gehörende Pakete und zum Erzeugen eines Zulassungszustands (138) für die Pakete der mehreren verschiedenen Flüsse auf der Basis der summierten Datenanzahl konfiguriert ist.

6. Vorrichtung nach einem vorherigen Anspruch, wobei der SB-Controller zum Erzeugen einer ersten und zweiten flussbasierten Datenanzahl für zu jeweiligen ersten und zweiten unterschiedlichen Flüssen gehörende Pakete und zum Erzeugen eines Zulassungszustands für die Pakete der ersten und zweiten Flüsse auf der Basis sowohl der ersten als auch der zweiten flussbasierten Datenanzahl konfiguriert ist.

7. Vorrichtung nach Anspruch 1, wobei der SB-Controller zum Erzeugen mehrerer Zulassungszustände auf der Basis von mehreren ausgewählten Flüssen konfiguriert ist und die Logik auf Datenebene zum Entscheiden auf der Basis der mehreren Zulassungszustände konfiguriert ist, ob ein zu einem der ausgewählten Flüsse gehörendes Paket in den SB zugelassen oder verworfen werden soll.

8. Vorrichtung nach einem vorherigen Anspruch, wobei die Logik auf Datenebene zum Bestimmen, für empfangene Pakete, von Ein- und Ausgangsprioritäten der jeweiligen Ausgangsports (24) unter den mehreren Ports konfiguriert ist, und wobei der SB-Controller zum Durchführen einer Belegungsabrechnung für (i) mit jeweiligen Eingangsports und Eingangsprioritäten assoziierte Rx-Datenanzahlen und (ii) mit jeweiligen Ausgangsports und Ausgangsprioritäten assoziierte Tx-Datenanzahlen und zum Erzeugen der Zulassungszustände auf der Basis der flussbasierten Datenanzahlen und mindestens einer der Rx-Datenanzahlen und der Tx-Datenanzahlen konfiguriert ist.

9. Vorrichtung nach Anspruch 8, wobei der SB-Controller zum parallelen Durchführen der flussbasierten Abrechnung und der Belegungsabrechnung konfiguriert ist.

10. Vorrichtung nach einem vorherigen Anspruch, wobei der SB-Controller zum Identifizieren, für ein empfangenes Paket, einer entsprechenden flussbasierten Datenanzahl durch (i) Anwenden einer Hash-Funktion auf ein oder mehrere Felder in einem Header des empfangenen Pakets oder (ii) Verarbeiten des Pakets anhand einer ACL (Access Control List) konfiguriert ist.

11. Vorrichtung nach einem der Ansprüche 1 bis 9, wobei der SB-Controller zum Identifizieren, für ein empfangenes Paket, einer entsprechenden flussbasierten Datenanzahl auf der Basis von flussbasierter Bindung konfiguriert ist, die in einem Protokoll verwendet wird, das ausgewählt ist aus einer Liste von Protokollen, die Folgendes umfasst: ein Tenant-Protokoll, ein Bridging-Protokoll, ein Routing-Protokoll und ein Tunneling-Protokoll.

12. Vorrichtung nach einem vorherigen Anspruch, wobei der SB-Controller konfiguriert ist zum lokalen Überwachen ausgewählter flussbasierter Datenanzahlen, Bewerten des Leistungsniveaus des Netzwerkgeräts auf der Basis der überwachten flussbasierten Datenanzahlen und zum Melden, auf der Basis eines Meldekriteriums, von das Leistungsniveau angebenden Informationen.

13. Vorrichtung nach einem vorherigen Anspruch, wobei der SB-Controller zum Berechnen einer Verwurfwahrscheinlichkeit zumindest auf der Basis einer mit einem oder mehreren ausgewählten Flüssen assoziierten flussbasierten Datenanzahl und zum Erzeugen eines Zulassungsstatus für die ein oder mehreren Flüsse auf der Basis der flussbasierten Datenanzahl und der Verwurfwahrscheinlichkeit konfiguriert ist.

14. Verfahren zum Steuern eines SB (Shared Buffer) (34), wobei das Verfahren Folgendes beinhaltet:
in einer Vorrichtung, die einen SB-Controller (54), mehrere Ports einschließlich eines für die Verbindung mit einem Kommunikationsnetzwerk (26) konfigurierten Eingangsports (22) und eine Logik auf Datenebene umfasst:
Zugreifen auf flussbasierte Datenanzahlen (58) und Zulassungszustände (62);
Durchführen von flussbasierter Abrechnung von Paketen, die von einem mit einem Kommunikationsnetzwerk (26) gekoppelten Netzwerkgerät (20) empfangen werden, um flussbasierte Datenanzahlen zu erzeugen, wobei jede flussbasierte Datenanzahl mit einem oder mehreren jeweiligen Flüssen assoziiert ist; und
Erzeugen von Zulassungszuständen auf der Basis der flussbasierten Datenanzahlen, wobei jeder Zulassungszustand aus ein oder mehreren jeweiligen flussbasierten Datenanzahlen erzeugt wird;
Empfangen des Pakets von dem Eingangsport;
Klassifizieren des Pakets in einen jeweiligen Fluss; und
Entscheiden auf der Basis von mehreren der erzeugten Zulassungszustände, ob das Paket in den SB zugelassen oder verworfen werden soll.

15. Verfahren nach Anspruch 14, wobei: der SB in einem Speicher enthalten ist, auf den der SB-Controller zugreifen kann, wobei der Speicher außerhalb der Vorrichtung liegt; oder die Vorrichtung außerdem einen Speicher umfasst und der SB in dem Speicher enthalten ist.

## Revendications

1. Appareil de commande d'un tampon partagé (SB) (34), l'appareil comprenant :
une interface (64) configurée pour accéder à des décomptes de données basés sur des flux (58) et à des états d'admission (62) ;
un dispositif de commande de SB (54), configuré pour :
réaliser une comptabilisation basée sur des flux de paquets reçus par un dispositif de réseau (20) couplé à un réseau de communication (26) pour produire des décomptes de données basés sur des flux, chaque décompte de données basé sur des flux étant associé à un ou plusieurs flux respectifs ; et
générer des états d'admission (62), les états d'admission comprenant des états d'admission basés sur des flux, sur la base, au moins, des décomptes de données basés sur des flux, chaque état d'admission basé sur des flux étant généré à partir d'un ou plusieurs décomptes de données basés sur des flux respectifs ; et
de multiples ports comprenant un port d'entrée (22), configuré pour se connecter au réseau de communication ; et
une logique de plan de données, configurée pour :
recevoir un paquet en provenance du port d'entrée ;
classer le paquet dans un flux respectif ; et
sur la base d'une pluralité des états d'admission générés, décider d'admettre le paquet dans le SB ou de rejeter le paquet.

2. Appareil selon la revendication 1, dans lequel le SB est compris dans une mémoire accessible au dispositif de commande de SB, la mémoire étant externe à l'appareil.

3. Appareil selon la revendication 1, l'appareil comprenant en outre une mémoire et le SB étant compris dans la mémoire.

4. Appareil selon l'une quelconque des revendications précédentes, dans lequel le dispositif de commande de SB est en outre configuré pour réaliser une comptabilisation d'occupation de paquets reçus par le dispositif de réseau pour produire des décomptes de données d'occupation, les états d'admission comprenant en outre des états d'admission d'occupation, les décomptes de données d'occupation et les états d'admission d'occupation n'étant pas associés à un ou plusieurs flux spécifiques, et la pluralité des états d'admission générés comprenant un état d'admission basé sur des flux et un état d'admission d'occupation.

5. Appareil selon l'une quelconque des revendications précédentes, dans lequel le dispositif de commande de SB est configuré pour produire un décompte de données agrégées (136) pour des paquets appartenant à de multiples flux différents, et pour générer un état d'admission (138) pour les paquets des multiples flux différents sur la base du décompte de données agrégées.

6. Appareil selon l'une quelconque des revendications précédentes, dans lequel le dispositif de commande de SB est configuré pour produire des premier et second décomptes de données basés sur des flux pour des paquets appartenant à des premier et second flux différents respectifs, et pour générer un état d'admission pour les paquets des premier et second flux sur la base des deux premier et second décomptes de données basés sur des flux.

7. Appareil selon la revendication 1, dans lequel le dispositif de commande de SB est configuré pour générer de multiples états d'admission sur la base de multiples flux sélectionnés, et la logique de plan de données est configurée pour décider d'admettre un paquet appartenant à un des flux sélectionnés dans le SB ou de rejeter le paquet, sur la base des multiples états d'admission.

8. Appareil selon l'une quelconque des revendications précédentes, dans lequel la logique de plan de données est configurée pour déterminer, pour des paquets reçus, des ports de sortie (24) respectifs parmi les multiples ports, des priorités d'entrée et des priorités de sortie, et dans lequel le dispositif de commande de SB est configuré pour réaliser une comptabilisation d'occupation pour (i) des décomptes de données Rx associés à des ports d'entrée respectifs et à des priorités d'entrée, et (ii) des décomptes de données Tx associés à des ports de sortie respectifs et à des priorités de sortie, et pour générer les états d'admission sur la base des décomptes de données basés sur des flux et sur la base des décomptes de données Rx et/ou des décomptes de données Tx.

9. Appareil selon la revendication 8, dans lequel le dispositif de commande de SB est configuré pour réaliser la comptabilisation basée sur des flux et la comptabilisation d'occupation en parallèle.

10. Appareil selon l'une quelconque des revendications précédentes, dans lequel le dispositif de commande de SB est configuré pour identifier, pour un paquet reçu, un décompte de données basé sur des flux correspondant (i) en appliquant une fonction de hachage à un ou plusieurs champs dans un en-tête du paquet reçu ou (ii) en traitant le paquet au moyen d'une liste de contrôle d'accès (ACL).

11. Appareil selon l'une quelconque des revendications 1 à 9, dans lequel le dispositif de commande de SB est configuré pour identifier, pour un paquet reçu, un décompte de données basé sur des flux correspondant, sur la base d'une liaison basée sur des flux utilisée dans un protocole sélectionné dans une liste de protocoles comprenant : un protocole de locataire, un protocole de pontage, un protocole de routage et un protocole de tunnel.

12. Appareil selon l'une quelconque des revendications précédentes, dans lequel le dispositif de commande de SB est configuré pour surveiller localement des décomptes de données basés sur des flux sélectionnés, pour évaluer un niveau de performance du dispositif de réseau sur la base des décomptes de données basés sur des flux surveillés et, sur la base d'un critère de signalement, pour signaler des informations indicatives du niveau de performance.

13. Appareil selon l'une quelconque des revendications précédentes, dans lequel le dispositif de commande de SB est configuré pour calculer une probabilité de rejet sur la base, au moins, d'un décompte de données basé sur des flux associé à un ou plusieurs flux sélectionnés et pour générer un état d'admission pour le ou les flux sur la base du décompte de données basé sur des flux et sur la base de la probabilité de rejet.

14. Procédé de commande d'un tampon partagé (SB) (34), le procédé consistant à :
dans un appareil comprenant un dispositif de commande de SB (54), de multiples ports comprenant un port d'entrée (22) configuré pour se connecter à un réseau de communication (26), et une logique de plan de données :
accéder à des décomptes de données basés sur des flux (58) et à des états d'admission (62) ;
réaliser une comptabilisation basée sur des flux de paquets reçus par un dispositif de réseau (20) couplé au réseau de communication pour produire des décomptes de données basés sur des flux, chaque décompte de données basé sur des flux étant associé à un ou plusieurs flux respectifs ;
générer des états d'admission sur la base, au moins, des décomptes de données basés sur des flux, chaque état d'admission étant généré à partir d'un ou plusieurs décomptes de données basés sur des flux respectifs ;
recevoir un paquet en provenance du port d'entrée ;
classer le paquet dans un flux respectif ; et
décider d'admettre le paquet dans le SB ou de rejeter le paquet sur la base d'une pluralité des états d'admission générés.

15. Procédé selon la revendication 14, dans lequel : le SB est compris dans une mémoire accessible au dispositif de commande de SB, la mémoire étant externe à l'appareil ; ou dans lequel l'appareil comprend en outre une mémoire et le SB est compris dans la mémoire.
